# EUROPEAN PATENT SPECIFICATION

(11) **EP 4 509 973 B1**
(45) Date of publication and mention of the grant of the patent: **22.04.2026**
(21) Application number: 24192300.2
(22) Date of filing: 01.08.2024
(51) Int. Cl.: G06F 3/12, H04N 1/00

(54) **INSPECTION SYSTEM, METHOD OF CONTROLLING INSPECTION SYSTEM, AND COMPUTER PROGRAM**
INSPEKTIONSSYSTEM, VERFAHREN ZUR STEUERUNG EINES INSPEKTIONSSYSTEMS UND COMPUTERPROGRAMM
SYSTÈME D'INSPECTION, PROCÉDÉ DE CONTRÔLE DU SYSTÈME D'INSPECTION ET LE PROGRAMME INFORMATIQUE

(30) Priority: 10.08.2023 JP 2023131144
(43) Date of publication of application: 19.02.2025
(73) Proprietor: CANON KABUSHIKI KAISHA, Tokyo 146-8501 (JP)
(72) Inventor: KIMURA, Takumi, 146-8501 Tokyo (JP)
(74) Representative: Canon Europe Limited

(56) References cited:
- JP-A- 2023 034 163
- US-A1- 2023 168 851

## Description

### BACKGROUND OF THE INVENTION

### Field of the Invention

The present invention relates to an inspection system, a method of controlling an inspection system, and a computer program.

### Description of the Related Art

Although inspections of printed matter have manually been conducted in the past, an apparatus which automatically executes inspections as a type of post-processing of a printing machine has been employed recently. In such an inspection apparatus, first, reference image data is registered. Next, input document image data is printed on a sheet on an image forming apparatus, and the image data printed on the sheet is read by an inspection sensor arranged inside the inspection apparatus. Then, an abnormal image included in the printed matter is detected by comparing the image data read by the inspection sensor with the reference image data registered initially. Hereinafter, inspection for detecting an abnormal image from a picture portion of the printed matter is called printed image inspection.

A plurality of print jobs and inspection jobs is created when the printed image inspection is executed with different print settings and different inspection settings. Thus, when the printed image inspection is executed many times, a large number of print jobs and inspection jobs are created and stored in a storage apparatus to take up storage capacity thereof, so that a user may eventually become unable to use the printed image inspection. Further, there are print jobs and inspection jobs that need to be deleted because of security reasons. In order to avoid the above-described lack of storage capacity and information leakage, the user has to select and delete print jobs and associated inspection jobs one by one.

According to a technique discussed in Japanese Patent Application Laid-Open No. 2020-49899, when a data amount of stored inspection jobs has reached a predetermined amount or more, inspection jobs determined to satisfy a predetermined condition, e.g., an inspection job whose update history information indicates a date of update earlier than a reference date, and an inspection job whose use frequency is a prescribed value or less, are deleted from a storage unit.
US2023/0168851 discloses an inspection system, in which, when a print job is cancelled, a corresponding inspection job is cancelled.

### SUMMARY OF THE INVENTION

According to a first aspect of the present invention, there is provided an inspection system as specified in claims 1 to 11. According to a second aspect of the present invention, there is provided a method of controlling an inspection system as specified in claims 12 and 14. According to a third aspect of the present invention, there is provided a computer program as specified in claims 13 and 15.

Further features of the present invention will become apparent from the following description of embodiments with reference to the attached drawings.

### BRIEF DESCRIPTION OF THE DRAWINGS

Fig. 1 is a block diagram illustrating an example of an overall configuration of an inspection system according to the present invention.
Fig. 2 is a block diagram illustrating an example of an internal configuration of an image forming apparatus according to a first embodiment.
Fig. 3 is a diagram illustrating an example of a print job management user interface (UI) screen according to the present embodiment.
Fig. 4 is a diagram illustrating an example of a print job trash box UI screen according to the present embodiment.
Fig. 5 is a diagram illustrating an example of an inspection job management UI screen according to the present embodiment.
Fig. 6 is a diagram illustrating an example of an inspection job trash box UI screen according to the present embodiment.
Fig. 7 is a flowchart illustrating an example of overall inspection processing according to the present embodiment.
Fig. 8 is a flowchart illustrating an example of processing at the time of print job deletion according to the first embodiment.
Fig. 9A is a diagram illustrating an example of a job deletion list update screen according to the first embodiment. Figs. 9B and 9C are diagrams illustrating other examples of the job deletion list update screen.
Fig. 10 is a flowchart illustrating processing at the time of print job deletion according to a second embodiment.
Fig. 11A is a diagram illustrating an example of a job deletion list update screen according to the second embodiment. Figs. 11B and 11C are diagrams illustrating other examples of the job deletion list update screen.

### DESCRIPTION OF THE EMBODIMENTS

Hereinafter, embodiments for implementing the present invention are described with reference to the appended drawings. The below-described embodiments are not intended to limit the present invention set forth in the appended claims. Although a plurality of features is described in the embodiments, not all of the features are essentially required for the present invention, and the plurality of features may be combined in any way.

### <Overall System Configuration>

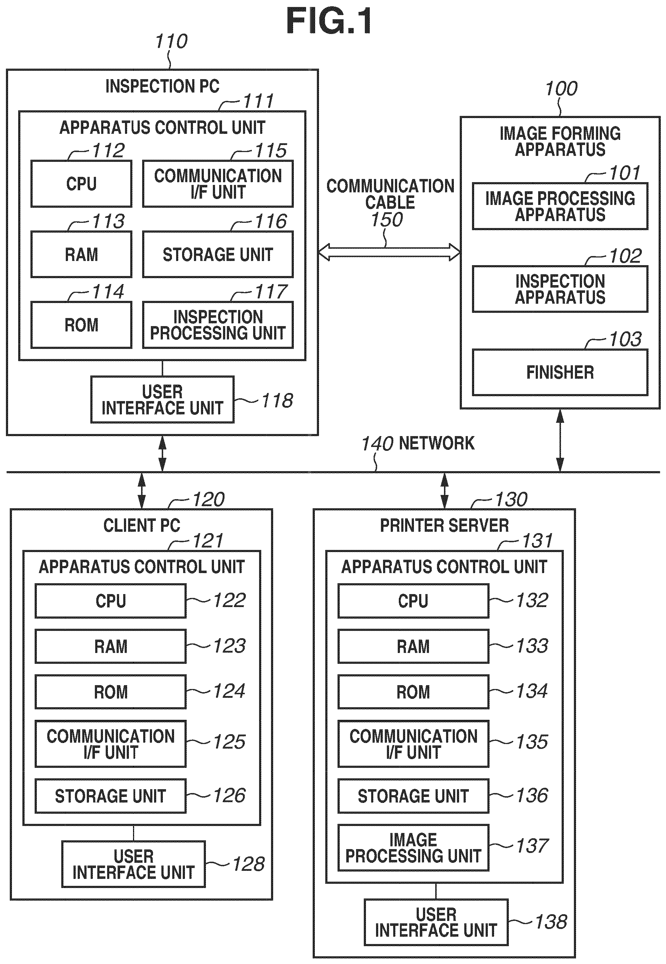

Fig. 1 is a block diagram illustrating an overall configuration of an inspection system according to a first embodiment. The inspection system according to the present embodiment includes an image forming apparatus 100, an inspection personal computer (PC) 110, a client PC 120, a printer server 130, a network 140, and a communication cable 150. In the present embodiment, the client PC 120 and the printer server 130 are also called information processing apparatuses.

The image forming apparatus 100 outputs printed matter based on various input data, such as print job data transmitted from the client PC 120 and the printer server 130. The image forming apparatus 100 includes an image processing apparatus 101, an inspection apparatus 102, and a finisher 103 and is connected with the image processing apparatus 101, the inspection apparatus 102, and the finisher 103 via a communication cable that is an internal bus.

The image processing apparatus 101 executes image processing on various input data based on a print setting, and executes image forming processing on recording sheets to form images on which the image processing has been executed based on a print job. Then, the image processing apparatus 101 outputs the recording sheets, on which images have been formed, as the printed matter.

The inspection apparatus 102 receives the printed matter output from the image processing apparatus 101, and acquires image data used for executing inspection to determine whether an abnormal image is included in the received printed matter. The abnormal image refers to an image which causes quality of the printed matter to be degraded. A circular-shape abnormal image (dot) made of coloring materials adhering to an unintended position when printing is executed, a color-missing spot generated when coloring materials do not sufficiently adhere to an intended position, and a linear-shape abnormal image (streak) are examples of the abnormal image. The image data acquired by the inspection apparatus 102 is transmitted to the below-described inspection PC 110 via the communication cable 150, so that the inspection PC 110 executes an inspection to determine whether the abnormal image is included in the printed matter. Then, the inspection apparatus 102 acquires a result of the inspection from the inspection PC 110. The finisher 103 receives output sheets inspected by the inspection apparatus 102, and changes a sheet-discharge destination and executes post-processing (such as book binding) as necessary based on the inspection result acquired by the inspection apparatus 102.

The image forming apparatus 100 is connected with the inspection PC 110, the client PC 120, and the printer server 130 via the network 140. The image forming apparatus 100 is connected with the inspection PC 110 via the communication cable 150, and executes communication with regard to image data used for inspection and a result of the inspection. In the present embodiment, the inspection is executed by the inspection PC 110. However, the present invention is not limited thereto. The present invention is also applicable to an in-line type inspection apparatus which seamlessly executes image formation, inspection, post-processing, and sheet discharge. The configuration of the image forming apparatus 100 according to the present embodiment is described below in detail.

The inspection PC 110 is a PC for inspecting images read from printed matter by using the inspection apparatus 102. The inspection PC 110 includes an apparatus control unit 111 and a user interface unit 118 (hereinafter, called "UI unit 118") serving as a display unit. The apparatus control unit 111 includes a controller substrate, and a central processing unit (CPU) 112, a random access memory (RAM) 113, a read only memory (ROM) 114, a communication interface (I/F) unit 115, a storage unit 116, and an inspection processing unit 117 are mounted on the apparatus control unit 111. In the present embodiment, communication between the modules is executed via an internal system bus (not illustrated). Alternatively, the inspection PC 110 may be built into the inspection apparatus 102.

According to an initial program stored in the storage unit 116, the CPU 112 reads a main program from the storage unit 116 and stores the read main program in the RAM 113. The RAM 113 is used as a memory for storing programs and a main work memory. The ROM 114 is used as a memory for temporarily storing data created while a program is being processed. The communication I/F unit 115 is used when the inspection PC 110 executes communication via the network 140 or the communication cable 150. The storage unit 116 is used for storing a large volume of data, such as program data, image data, and inspection jobs. In order to execute inspection to determine whether an abnormal image, such as a stain or a missing spot, is included in the image data acquired by the inspection apparatus 102, the inspection processing unit 117 calculates a difference value between a reference image stored in the RAM 113 as a correct image and an inspection target scanned image. Next, the inspection processing unit 117 executes the inspection by comparing the calculated difference value with an inspection threshold of each inspection item (i.e., contrast and size) for each pixel. An inspection result is stored in the RAM 113. For example, the RAM 113 stores information indicating whether the abnormal image is included in the printed matter, and position information on the abnormal image used for displaying a type of detected abnormal image (i.e., a dot or a streak) on the UI unit 118. Then, the inspection result is transmitted to the inspection apparatus 102 via the communication cable 150.

The UI unit 118 is a device including, for example, a keyboard, a mouse, a display, and/or other input/output devices and is capable of receiving various setting values and specification values.

The client PC 120 is communicably connected with the image forming apparatus 100, the inspection PC 110, and the printer server 130 via the network 140, and is a PC for operating the apparatuses connected to the client PC 120. The client PC 120 includes an apparatus control unit 121 and a UI unit 128. The apparatus control unit 121 includes a controller substrate, and a CPU 122, a RAM 123, a ROM 124, a communication I/F unit 125, and a storage unit 126 are mounted on the apparatus control unit 121. Functions of the devices included in the client PC 120 are similar to the functions of corresponding devices included in the inspection PC 110, and thus descriptions thereof are omitted.

The printer server 130 executes raster image processing (RIP) on print data and document data to convert the data into data of a bitmap format. The printer server 130 also serves as a server which controls printing performed by the image forming apparatus 100 and manages print jobs. The printer server 130 includes an apparatus control unit 131 and a UI unit 138 serving as a display unit. The apparatus control unit 131 includes a controller substrate, and a CPU 132, a RAM 133, a ROM 134, a communication I/F unit 135, a storage unit 136, and an image processing unit 137 are mounted on the apparatus control unit 131. Functions of the devices, except for the storage unit 136 and the image processing unit 137, in the printer server 130 are similar to the functions of corresponding devices included in the inspection PC 110, and thus descriptions thereof are omitted.

The storage unit 136 is used for storing a large volume of data, such as program data, image data, and print jobs. The image processing unit 137 executes RIP processing on print data and document data transmitted from the client PC 120 to convert the data into image data of a bitmap format in accordance with a purpose of use and a print setting. For example, when print data is to be printed, image data having the resolution of 600 dots per inch (dpi) is created by the RIP processing.

The configuration of the entire system including the inspection apparatus according to the present embodiment of the present invention has been described above.

The image forming apparatus 100, the inspection PC 110, the client PC 120, and the printer server 130 can communicate with each other via the network 140. However, the present invention is not limited to the above-described present embodiment, and a network connection may be established between the apparatuses. Further, for example, the storage units are non-volatile storages, such as a solid-state drive (SSD) and a hard disk drive (HDD).

### <Configuration of Image Forming Apparatus 100>

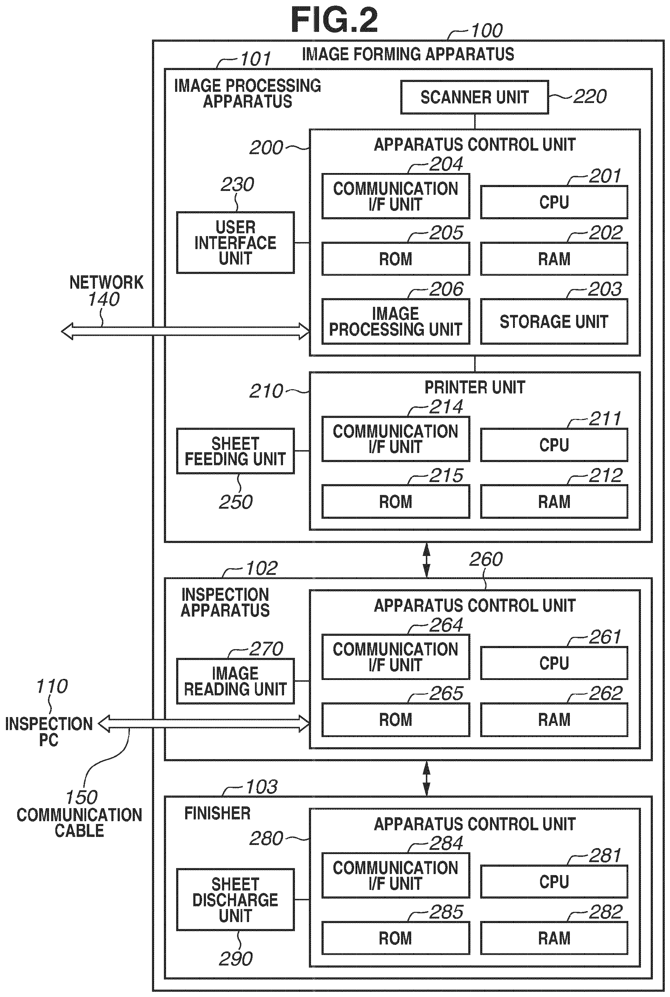

Fig. 2 is a block diagram illustrating an internal configuration of the image forming apparatus 100 according to the present embodiment.

The image forming apparatus 100 includes the image processing apparatus 101, the inspection apparatus 102, and the finisher 103. The image processing apparatus 101 includes an apparatus control unit 200, a printer unit 210, a scanner unit 220, a UI unit 230, and a sheet feeding unit 250.

The apparatus control unit 200 receives images and documents via the network 140, and converts the received images and documents into print data. A CPU 201, a RAM 202, a storage unit 203, a communication I/F unit 204, a ROM 205, and an image processing unit 206 are mounted on the apparatus control unit 200. Functions of the above-described devices are similar to functions of corresponding devices included in the printer server 130, and thus descriptions thereof are omitted.

The image processing unit 206 acquires page-description language (PDL) data stored in the RAM 202, and executes image processing for converting the PDL data into print data. In the image processing for converting the PDL data into the print data, for example, the PDL data is converted into multivalued bitmap data through RIP processing, and the multivalued bitmap data is further converted into binary bitmap data through known screen processing. The binary bitmap data acquired by the image processing unit 206 is transmitted to the printer unit 210 via the communication I/F unit 204.

The printer unit 210 conveys a sheet from the sheet feeding unit 250, receives the binary bitmap data created by the apparatus control unit 200, and prints the binary bitmap data on the sheet by using coloring materials. At this time, a CPU 211 issues an instruction to the printer unit 210 based on a print setting specified by the user. For example, in a case where the user specifies a print setting using coated paper, the CPU 211 issues an instruction to execute printing by using a sheet cassette (not illustrated) storing coated paper in the sheet feeding unit 250. Various processes described above from receiving PDL data to printing bitmap data on a sheet is controlled by the apparatus control unit 200 and the printer unit 210, so that a full-color toner image is formed on the sheet. A CPU 211, a RAM 212, a communication I/F unit 214, and a ROM 215 are mounted on the printer unit 210. Functions of the devices are similar to the functions of corresponding devices included in the apparatus control unit 200, and thus descriptions thereof are omitted.

The scanner unit 220 irradiates a document image with light emitted from a light source (not illustrated) to form a reflected document image on a charge coupled device (CCD) sensor or the like, and acquires a read signal as multivalued image data in red, green, and blue.

The UI unit 230 is a device including, for example, a keyboard, a mouse, a display, and/or other input/output devices and is capable of receiving various setting values and specification values. The sheet feeding unit 250 includes one or more cassettes in which sheets used for printing are set. The sheet feeding unit 250 feeds a sheet from a cassette corresponding to a sheet size specified by the print setting, and conveys the sheet to the printer unit 210.

The inspection apparatus 102 includes an apparatus control unit 260 and an image reading unit 270. The image reading unit 270 reads printed matter conveyed from the printer unit 210.

The apparatus control unit 260 executes control to transmit image data acquired by the image reading unit 270 to the below-described inspection PC 110 via the communication cable 150. The inspection PC 110 inspects the transferred image data to determine whether an abnormal image is included in the printed matter, and the apparatus control unit 260 acquires an inspection result from the inspection PC 110 and transmits the inspection result to the finisher 103. A CPU 261, a RAM 262, a communication I/F unit 264, and a ROM 265 are mounted on the apparatus control unit 260. Functions of the devices are similar to the functions of corresponding devices included in the apparatus control unit 200, and thus the descriptions thereof are omitted.

The finisher 103 includes an apparatus control unit 280 and a sheet discharge unit 290. In consideration of the print setting and the inspection result, the apparatus control unit 280 determines sheet discharge control executed on the sheet discharge unit 290. A CPU 281, a RAM 282, a communication I/F unit 284, and a ROM 285 are mounted on the apparatus control unit 280. Functions of the devices are similar to the functions of corresponding devices included in the apparatus control unit 200, and thus descriptions thereof are omitted.

The sheet discharge unit 290 changes a sheet-discharge destination of the printed matter conveyed from the inspection apparatus 102 based on the post-processing (e.g., bookbinding processing) specified in the print setting and the inspection result.

For example, the sheet-discharge destination may be changed depending on whether an abnormal image is included in the printed matter.

In this case, based on the inspection result received from the inspection apparatus 102, the finisher 103 discharges printed matter without an abnormal image to a normal sheet discharge tray, and discharges printed matter with an abnormal image to a sheet discharge tray different from the normal sheet discharge tray.

The image forming apparatus 100 according to the present embodiment of the present invention has been described above. The present invention is not limited to the above-described embodiment, and is applicable to any image forming apparatus capable of printing print data and reading an image used to execute inspection and determine whether an abnormal image is included in the printed matter.

### <Configuration of UI Unit>

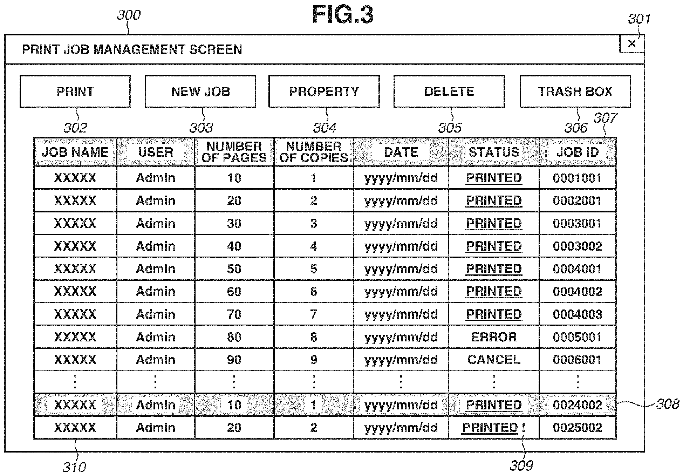

Fig. 3 is a diagram illustrating an example of a print job management screen 300 displayed on the UI unit 138 included in the printer server 130. A print job is a job for issuing a printing instruction to the image forming apparatus 100. Print data, document data, and print settings are included in the print job. The print settings include, for example, the number of pages, the number of copies, a sheet type, and execution/non-execution of printed image inspection. When a print job is created, a seven-digit identifier (ID) consisting of first four digits and last three digits is allocated to the print job. The first four digits do not overlap with first four digits of an ID allocated to an existing print job, and last three digits are 001. A reference image registration print job is a print job for registering a reference image to be a correct image for a printed image inspection. An inspection print job is a print job for outputting the printed matter on which the printed image inspection is to be executed. The reference image registration print job may be used as the inspection print job. The printer server 130 does not have to distinguish between the inspection print job and the reference image registration print job.

The print job management screen 300 is displayed when the printer server 130 is activated. Alternatively, the print job management screen 300 is displayed when the user operates the UI unit 138 to activate an application. The print job management screen 300 is closed when a button 301 is pressed. A print job selected from a print job list 310 is printed when a button 302 is pressed. A new print job is created when a button 303 is pressed. When a new print job is created, a number corresponding to the first four digits of a job ID is issued. In the present embodiment, a job ID is referred to as an identification number. The identification number is a common number assigned to associated jobs.

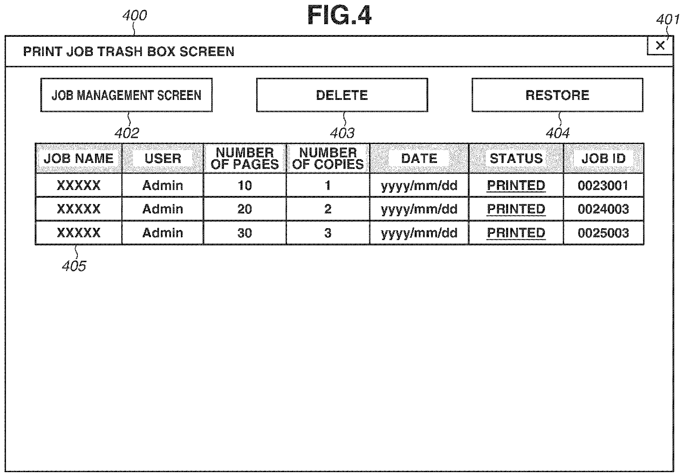

The user presses a button 304 to edit properties of the print job selected from the print job list 310. A button 305 is a delete button. When the button 305 is pressed, the print job selected from the print job list 310 is deleted from the print job list 310 or moved to a print job trash box list 405 described below. A button 306 is a trash box button. When the button 306 is pressed, the print job management screen 300 transitions to a print job trash box screen 400 illustrated in Fig. 4.

A job ID 307 is an ID for identifying a print job. The job ID is stored in a storage unit in association with a print job and an inspection job. In the present embodiment, a job having a job ID including the same first four digits is recognized as an associated print job or an associated inspection job, and the last three digits of each job ID is used to distinguish between the associated print jobs. A print job 308 is displayed in a grayed-out state in a case where an associated print job or an associated inspection job is deleted. An icon 309 is displayed in a case where the associated print job or the associated inspection job is deleted. By display of the grayed-out print job 308 and the icon 309 on the print job list 310, the user can recognize deletion of the associated print job or the associated inspection job. In the present embodiment, descriptions are given that a print job is stored in the storage unit 136 of the printer server 130 and an inspection job is stored in the storage unit 116 of the inspection PC 110, but the present invention is not limited thereto. For example, a configuration may be used where a print job and an inspection job are stored in a storage unit of a server which executes job management. In the embodiments, the job IDs are numbers. However, the job IDs may be character strings including numbers and/or letters and/or symbols. Job IDs of associated jobs can be allocated similar job IDs wherein a part of the character string is the same for associated jobs. In the above example, the character string is a seven digit number wherein the first four digits are the same for associated jobs.

Fig. 4 is a diagram illustrating an example of the print job trash box screen 400 displayed on the UI unit 138. The print job trash box screen 400 is displayed when the user presses the button 306 displayed on the print job management screen 300. A screen displayed on the UI unit 138 is changed by the CPU 132 serving as a display control unit.

The print job trash box screen 400 is closed when a button 401 is pressed. When a button 402 is pressed, the print job trash box screen 400 transitions to the print job management screen 300. A button 403 is a delete button. When the button 403 is pressed, a print job selected from the print job trash box list 405 is deleted from the print job trash box list 405. A button 404 is a restore button. When the button 404 is pressed, a print job selected from the print job trash box list 405 is moved to the print job list 310.

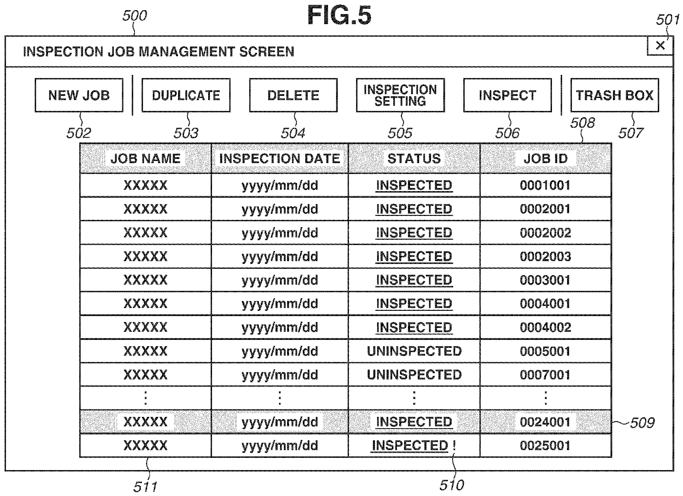

Fig. 5 is a diagram illustrating an example of an inspection job management screen 500 displayed on the UI unit 118 of the inspection PC 110. An inspection job refers to a job which includes at least a reference image, and an inspection job name, an inspection date, an inspection setting, an inspection result, and an inspection report.

The inspection job management screen 500 is displayed when the inspection PC 110 is activated. Alternatively, the inspection job management screen 500 is displayed when the user operates the UI unit 118 to activate an application. The user can make the inspection job management screen 500 transition to screens for reference image registration, inspection settings, and inspection, and also to an inspection job trash box screen 600. The inspection job management screen 500 is closed when a button 501 is pressed. The user presses a button 502 to create a new inspection job, and a reference image is registered.

A previously-created inspection job is duplicated when a button 503 is pressed. The user presses the button 503 to duplicate the inspection job selected from an inspection job list 511. By duplicating an inspection job, a reference image and an inspection setting are also duplicated, so that the user can newly execute an inspection. A button 504 is a delete button. When the button 504 is pressed, an inspection job selected from the inspection job list 511 is deleted from the inspection job list 511 or moved to an inspection job trash box list 605 described below. A button 505 is an inspection setting button. The user presses the button 505 to make an inspection setting of the inspection job for which a reference image has already been registered. A button 506 is an inspection button. The user presses the button 506 to execute an inspection on the inspection job for which the user has already registered a reference image and completed the inspection setting.

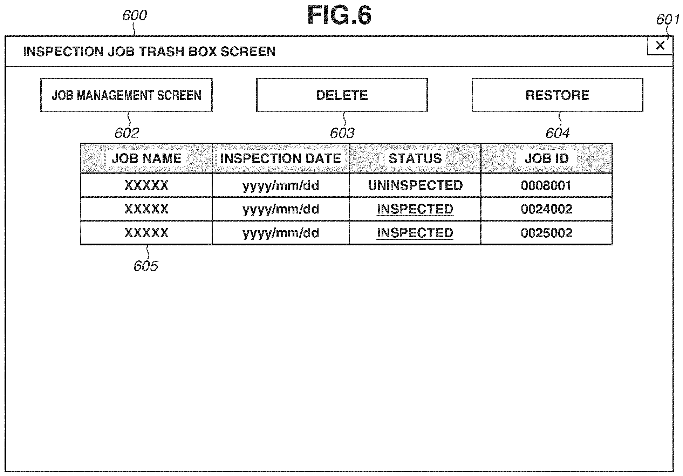

A button 507 is a trash box button. When the button 507 is pressed, the inspection job management screen 500 transitions to the inspection job trash box screen 600 illustrated in Fig. 6. A job ID 508 is an ID for identifying an inspection job. In the present embodiment, jobs having job IDs including the same first four digits are recognized as associated print jobs or associated inspection jobs, and the last three digits of each job ID is used to distinguish between the associated inspection jobs.

An inspection job 509 is displayed in a grayed-out state in a case where an associated print job or an associated inspection job is deleted. An icon 510 is displayed in a case where the associated print job or the associated inspection job is deleted. By display of the grayed-out inspection job 509 and the icon 510 on the inspection job list 511, the user can recognize deletion of the associated print job or the associated inspection job.

Fig. 6 is a diagram illustrating an example of the inspection job trash box screen 600 displayed on the UI unit 118. The inspection job trash box screen 600 is displayed when the user presses the button 507 displayed on the inspection job management screen 500. The inspection job trash box screen 600 is closed when a button 601 is pressed. When a button 602 is pressed, the inspection job trash box screen 600 transitions to the inspection job management screen 500. A button 603 is a delete button. When the button 603 is pressed, an inspection job selected from the inspection job trash box list 605 is deleted from the inspection job trash box list 605. A button 604 is a restore button. When the button 604 is pressed, an inspection job selected from the inspection job trash box list 605 is moved to the inspection job list 511.

### <Overall Inspection Processing Flow>

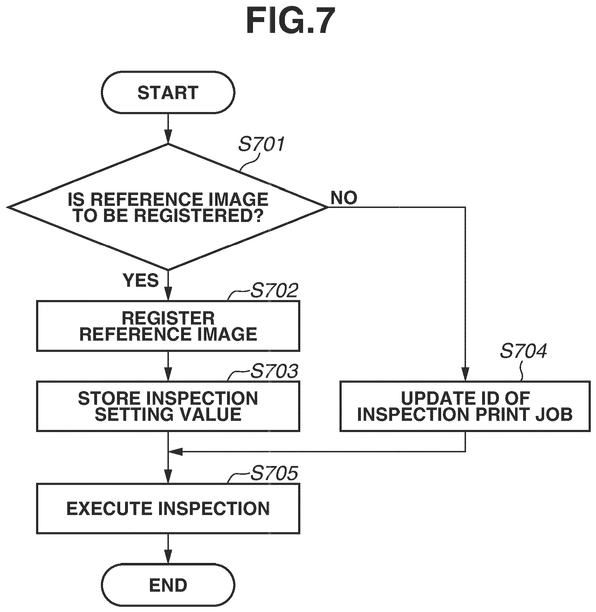

Fig. 7 is a flowchart illustrating processing which allows the user to execute an inspection after registering a reference image and an inspection setting in the inspection system, or to execute an inspection by using an existing inspection job. The processing is executed by the user by operating the printer server 130 and the inspection PC 110.

At this time, with respect to the processing executed by the inspection PC 110, a program code stored in the storage unit 116 is loaded into the RAM 113, and the apparatus control unit 111 executes control by causing the CPU 112 to execute the program code. Further, with respect to the processing executed by the printer server 130, a program code stored in the storage unit 136 is loaded into the RAM 133, and the apparatus control unit 131 executes control by causing the CPU 132 to execute the program code. Furthermore, with respect to the processing executed by the image forming apparatus 100, a program code stored in the storage unit 203 is loaded into the RAM 202, and the apparatus control unit 200 executes control by causing the CPU 201 to execute the program code.

In step S701, the CPU 112 determines whether a reference image is to be registered or an existing inspection job is to be used. In a case where the button 502 of the inspection job management screen 500 displayed on the UI unit 118 is pressed, the CPU 112 determines that a reference image is to be registered (YES in step S701), and the processing proceeds to step S702. In a case where the button 506 is pressed after an inspection job is selected from the inspection job list 511, the CPU 112 determines that an existing inspection job is to be used (NO in step S701), and the processing proceeds to step S704.

In step S702, the CPU 112 registers a reference image used as a correct image for the inspection. The inspection PC 110 stands by in a reference image reading mode, and the printer server 130 executes a reference image registration print job. As the reference image registration print job to be executed in step S702, the user may newly create a print job by pressing the button 303, or may use an existing print job in the print job list 310. When printing is executed, the inspection apparatus 102 detects conveyance of printed matter and scans the printed matter by the image reading unit 270, and the scanned image is stored in the storage unit 116 of the inspection PC 110 as a reference image used for the inspection job.

Further, the CPU 112 uses the first four digits of the ID of the reference image registration print job executed by the printer server 130 as the first four digits of an ID assigned to a newly created inspection job. The CPU 112 uses the last three digits of the ID of the inspection job to distinguish between the associated inspection jobs (i.e., the last three digits indicating the number of associated inspection jobs), and stores the ID in the storage unit 116 of the inspection PC 110 to associate the inspection job with the print job. For example, in a case where the reference image registration print job has an ID 0002001, and inspection jobs having IDs 0002001 and 0002002 are included in the existing inspecting jobs, an ID 002003 is assigned to a newly created inspection job. Therefore, in a case where an existing print job included in the print job list 310 is used as the reference image registration print job, there is a plurality of inspection jobs associated with that print job.

In step S703, based on the inspection setting received from the user on the inspection job management screen 500 displayed on the UI unit 118, the CPU 112 stores various inspection setting values, such as an inspection area and an inspection level of the inspection job, in the storage unit 116 of the inspection PC 110.

In step S704, in a case where use of the existing inspection job is selected, the CPU 112 transmits the first four digits of the ID of the inspection job selected in step S701 to the CPU 132 of the printer server 130. The CPU 132 uses the first four digits of the ID of the inspection job received from the CPU 112 as the first four digits of the ID of the inspection print job. As the inspection print job executed in step S704, the user may newly create a print job by pressing the button 303, or may select an existing print job from the print job list 310. The CPU 132 uses the last three digits of the ID to distinguish between the associated print jobs (i.e., the last three digits indicating the number of associated print jobs), and updates the ID of the print job. For example, in a case where the inspection job selected in step S701 has the ID 0003001, and a print job having the ID 0003001 is included in the existing print jobs, an ID 0003002 is assigned to the inspection print job. In a case where the first four digits of the ID of the inspection print job matches the first four digits of the ID of the inspection job selected in step S701, the CPU 132 does not have to update the ID. In other words, in a case where the first four digits of the ID of the inspection print job do not match the first four digits of the ID of the inspection job selected in step S701, there is a plurality of print jobs associated with that inspection job.

In step S705, the CPU 112 receives the print job used as the reference image registration print job in step S702 or the print job used as the inspection print job in step S704 from the printer server 130. Next, the inspection apparatus 102 detects conveyance of sheets and scans the sheets by the image reading unit 270, and the scanned images are stored in the RAM 113 of the inspection PC 110. Then, the CPU 112 loads the reference image and the inspection setting values of the inspection job stored in the storage unit 116 in steps S702 and S703 or the reference image and the inspection setting values of the existing inspection job selected in step S701 into the RAM 113. The CPU 112 executes an inspection on the images scanned by the image reading unit 270 by using the reference image loaded into the RAM 113 from the storage unit 116 and the inspection setting values loaded into the RAM 113 from the storage unit 116, and ends the processing illustrated in this flowchart.

In the present embodiment, a reference image is registered by scanning the reference image by the image reading unit 270. However, the present invention is not limited thereto. For example, an image processed by the printer server 130 or the image processing unit 206 of the image forming apparatus 100 through the RIP processing may be registered as the reference image. At this time, in the RIP processing for the reference image, the reference image is created by converting an image having resolution of 600 dpi into an image having resolution of 300 dpi. The image data processed through the RIP processing is transmitted to the inspection PC 110 via the network 140 or the communication cable 150, and used as the reference image for the inspection. Further, although a print job and an inspection job are associated with each other by using the ID, another method can also be employed as long as the print job and the inspection job are associated with each other.

### <Print Job Deletion Processing Flow>

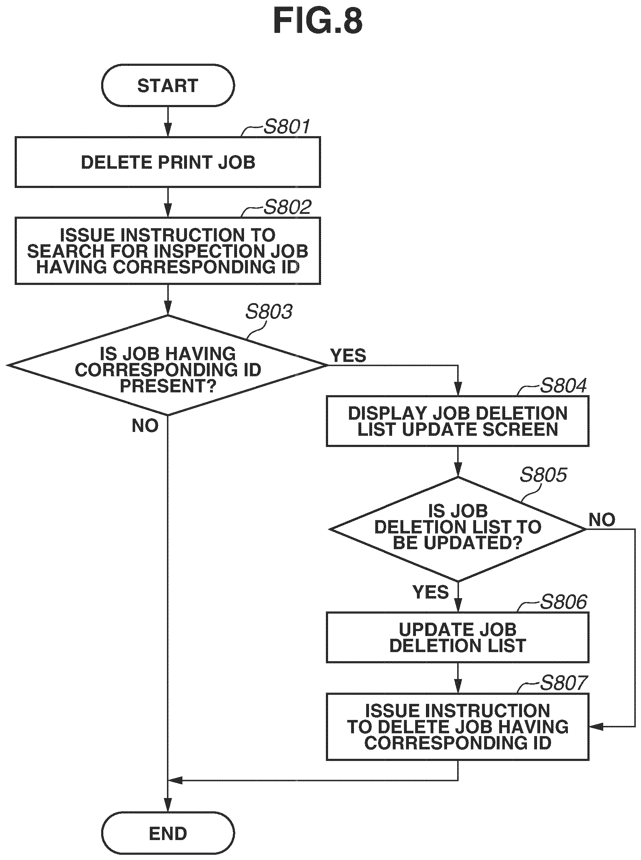

Fig. 8 is a flowchart illustrating processing executed when the user deletes a print job stored in the storage unit 136 of the printer server 130. By executing the processing, an associated inspection job can be deleted when the print job is deleted. The processing in Fig. 8 is executed by the user operating the UI unit 138. At this time, a program code stored in the storage unit 136 is loaded into the RAM 133, and the apparatus control unit 131 executes control by causing the CPU 132 to execute the program code. Further, with respect to the processing executed by the inspection PC 110, a program code stored in the storage unit 116 is loaded into the RAM 113, and the apparatus control unit 111 executes control by causing the CPU 112 to execute the program code.

In step S801, the CPU 132 determines whether the user has selected a print job from the print job list 310 of the print job management screen 300 displayed on the UI unit 138 and pressed the delete button 305. In other words, the CPU 132 determines whether a delete instruction is issued for the selected print job. When the delete button 305 is pressed, the CPU 132 deletes the print job stored in the storage unit 136.

In step S802, the CPU 132 transmits information indicating deletion of the print job and an ID of the deleted print job to the CPU 112 of the inspection PC 110.

The CPU 112 receives the information indicating deletion of the print job and the ID of the deleted print job transmitted in step S802, and creates an empty job deletion list. Then, the CPU 112 searches through the storage unit 116 for an inspection job having an ID whose first four digits match that of the received ID of the print job. In a case where the inspection job having the corresponding ID is present, the CPU 112 adds that inspection job to the job deletion list. For example, in a case where the deleted print job has an ID 0002001, and inspection jobs having IDs 0002001, 0002002, and 0003001 are present in the storage unit 116, the inspection jobs having the IDs 0002001 and 0002002 are added to the job deletion list. After the search is completed, the CPU 112 transmits information about the created job deletion list to the CPU 132.

In step S803, the CPU 132 receives the information about the job deletion list from the CPU 112, and determines whether an inspection job having the corresponding ID is present based on a result of the search executed in step S802. In a case where the job deletion list is not empty (YES in step S803), the processing proceeds to step S804. In a case where the job deletion list is empty (NO in step S803), the processing in the flowchart is ended.

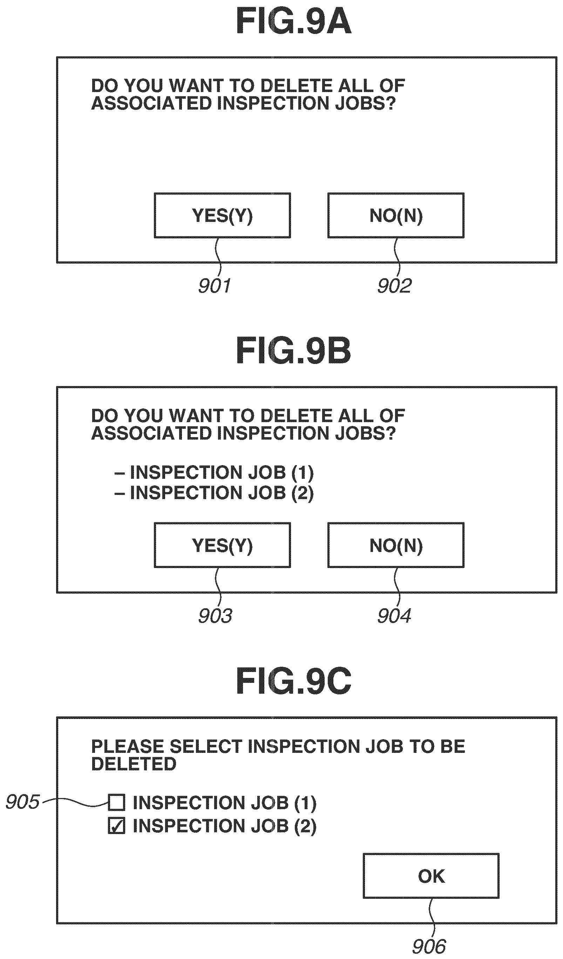

In step S804, the CPU 132 displays a job deletion list update screen on the UI unit 138. Figs. 9A to 9C illustrate examples of the job deletion list update screen displayed on the UI unit 138.

Fig. 9A illustrates a dialogue for confirming whether to delete all of the associated jobs. At this time, information about a job deletion list may also be displayed thereon as illustrated in Fig. 9B. Fig. 9C illustrates a dialogue displaying the information about a job deletion list, which allows the user to select whether to delete a job by checking each checkbox. In a case where the job deletion list update screen is not displayed, the CPU 132 advances the processing to step S807 from step S803 without executing the processing in steps S804 to S806.

In step S805, the CPU 132 determines whether the job deletion list is to be updated. Herein, the CPU 132 determines whether a YES button 901 (903) or a NO button 902 (904) illustrated in Fig. 9A (9B) is pressed. Further, the CPU 132 determines whether an OK button 906 is pressed in a state where a checkmark is not placed in checkboxes 905 illustrated in Fig. 9C. In a case where the NO button 902 (904) is pressed (YES in step S805), the CPU 132 determines that the job deletion list is to be updated, and the processing proceeds to step S806. In a case where the YES button 901 (903) is pressed (NO in step S805), the CPU 132 determines that the job deletion list is not to be updated, and the processing proceeds to step S807. Further, in a case where the OK button 906 is pressed in a state where not a single checkmark is placed in the checkboxes 905 (YES in step S805), the CPU 132 determines that the job deletion list is to be updated, and the processing proceeds to step S806. In a case where checkmarks are placed in all of the checkboxes 905 (NO in step S805), the CPU 132 determines that the job deletion list is not to be updated, and the processing proceeds to step S807.

In a case where the job deletion list update screen illustrated in Fig. 9A or 9B is displayed in step S804, in step S806, the CPU 132 empties the job deletion list and transmits the job deletion list to the CPU 112. Alternatively, in a case where the job deletion list update screen illustrated in Fig. 9C is displayed in step S804, the CPU 132 deletes a job without a checkmark in the checkbox 905 from the job deletion list, and transmits the job deletion list to the CPU 112. The CPU 112 updates the job deletion list created in step S802 with the received job deletion list.

In step S807, the CPU 132 transmits, to the CPU 112, an instruction to delete all of the inspection jobs included in the job deletion list from the storage unit 116, and ends the processing in this flowchart. The CPU 112 receives the delete instruction transmitted in step S807, and deletes all of the inspection jobs included in the job deletion list from the storage unit 116.

As above, a case where the user is prompted to determine whether to delete the associated inspection jobs has been described. In a case where all of the associated inspection jobs are to be deleted uniformly, the processing in steps S804 to S806 may be omitted, and the inspection job having the corresponding ID may be deleted in step S807 without displaying any one of the screens illustrated in Figs. 9A to 9C. As described above, by deleting the associated inspection job in concurrence with deletion of the print job, it is possible to improve the user's convenience at the time of print job deletion.

### <Print Job Deletion Processing Flow>

In the first embodiment, the method has been described by which the user's convenience is improved at the time of print job deletion by deleting the associated inspection job in concurrence with deletion of the print job. Then, in a second embodiment, a method is described by which both the associated print job and the associated inspection job are deleted when the print job is deleted. Hereinafter, the present embodiment is described with respect to a portion different from the above-described first embodiment. A portion that is not described in detail is similar to that according to the first embodiment.

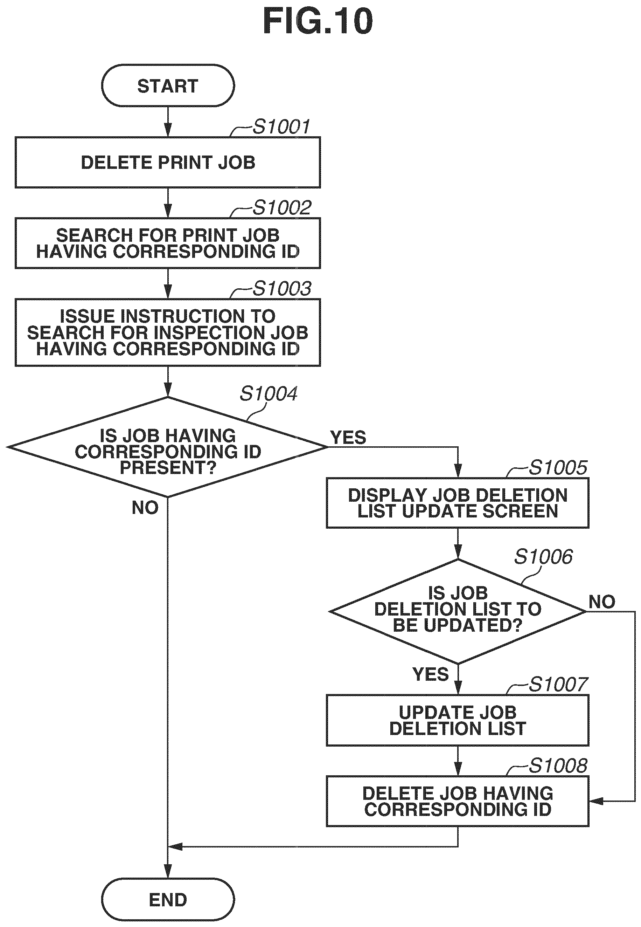

Fig. 10 is a flowchart illustrating processing executed when the user deletes a print job stored in the storage unit 136 of the printer server 130. By executing the processing, both the associated print job and the associated inspection job can be deleted when the print job is deleted.

The processing in Fig. 10 is executed by the user operating the UI unit 138. At this time, a program code stored in the storage unit 136 is loaded into the RAM 133, and the apparatus control unit 131 executes control by causing the CPU 132 to execute the program code. Further, with respect to the processing executed by the inspection PC 110, a program code stored in the storage unit 116 is loaded into the RAM 113, and the apparatus control unit 111 executes control by causing the CPU 112 to execute the program code.

The processing in step S1001 is similar to the processing in step S801 illustrated in Fig. 8, and thus a description thereof is omitted.

In step S1002, the CPU 132 creates an empty job deletion list (1), and searches through the storage unit 136 for another print job having an ID whose first four digits match the first four digits of the ID of the print job deleted in step S1001. In a case where a print job having the corresponding ID is present, the CPU 132 adds that print job to the job deletion list (1). For example, in a case where the deleted print job has an ID 0004002, and print jobs having IDs 0004001, 0004003, and 0005001 are present in the storage unit 136, the print jobs having the IDs 0004001 and 0004003 are added to the job deletion list (1).

In step S1003, the CPU 132 transmits information indicating deletion of the print job and the ID of the deleted print job to the CPU 112 of the inspection PC 110.

The CPU 112 receives the information indicating deletion of the print job and the ID of the deleted print job transmitted in step S1003, and creates an empty job deletion list (2). Then, the CPU 112 adds an inspection job having the corresponding ID to the job deletion list (2). A specific method is similar to the method described in Fig. 8, and thus a description thereof is omitted.

In step S1004, the CPU 132 determines whether a job having the corresponding ID is present based on results of the searches executed in steps S1002 and S1003. In a case where any one of the job deletion list (1) created in step S1002 and the job deletion list (2) received in step S1003 is not empty (YES in step S1004), the processing proceeds to step S1005. In a case where both the job deletion list (1) created in step S1002 and the job deletion list (2) received in step S1003 are empty (NO in step S1004), the processing in this flowchart is ended.

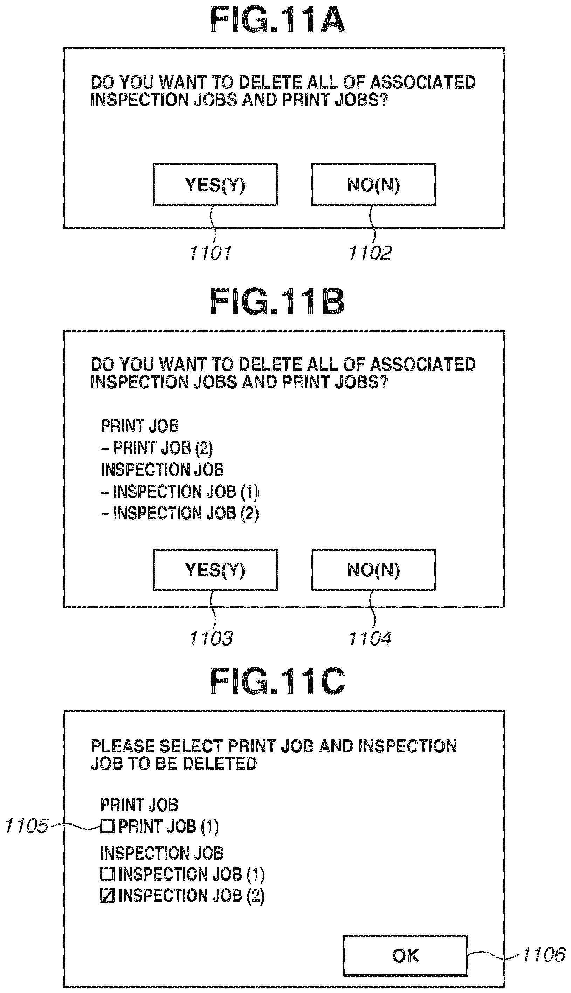

In step S1005, the CPU 132 displays a job deletion list update screen on the UI unit 138. Figs. 11A to 11C illustrate examples of the job deletion list update screen displayed on the UI unit 138. Fig. 11A illustrates a dialogue for confirming whether to delete all of the associated jobs. At this time, information about the job deletion lists (1) and (2) may also be displayed thereon as illustrated in Fig. 11B. Fig. 11C illustrates a dialogue displaying the information about both of the job deletion lists (1) and (2), which allows the user to select whether to delete a job by checking each checkbox. In a case where the job deletion list update screen is not displayed, the CPU 132 advances the processing to step S1008 from step S1004 without executing the processing in steps S1005 to S1007.

In step S1006, the CPU 132 determines whether the job deletion lists (1) and (2) are to be updated. Herein, the CPU 132 determines whether a YES button 1101 (1103) or a NO button 1102 (1104) illustrated in Fig. 11A (11B) is pressed. Further, the CPU 132 determines whether an OK button 1106 is pressed in a state where a checkmark is not placed in checkboxes 1105 illustrated in Fig. 11C. In a case where the NO button 1102 (1104) is pressed (YES in step S1006), the CPU 132 determines that the job deletion lists (1) and (2) are to be updated, and the processing proceeds to step S1007. In a case where the YES button 1101 (1103) is pressed (NO in step S1006), the CPU 132 determines that the job deletion lists (1) and (2) are not to be updated, and the processing proceeds to step S1008. Further, in a case where the OK button 1106 is pressed in a state where not a single checkmark is placed in the checkboxes 1105 (YES in step S1006), the CPU 132 determines that the job deletion lists (1) and (2) are to be updated, and the processing proceeds to step S1007. In a case where checkmarks are placed in all of the checkboxes 1105 (NO in step S1006), the CPU 132 determines that the job deletion lists (1) and (2) are not to be updated, and the processing proceeds to step S1008.

In a case where the job deletion list update screen illustrated in Fig. 11A or 11B is displayed in step S1005, in step S1007, the CPU 132 empties both of the job deletion lists (1) and (2). Then, the CPU 132 transmits the job deletion list (2) to the CPU 112. Alternatively, in a case where the job deletion list update screen illustrated in Fig. 11C is displayed in step S1005, the CPU 132 deletes a job without a checkmark in the checkbox 1105 from the corresponding job deletion list (1) or (2). Then, the CPU 132 transmits the job deletion list (2) to the CPU 112. The CPU 112 updates the job deletion list (2) created in step S1003 with the received job deletion list (2).

In step S1008, the CPU 132 deletes all of the print jobs included in the job deletion list (1) from the storage unit 136. Further, the CPU 132 transmits, to the CPU 112, an instruction to delete the inspection jobs included in the job deletion list (2) from the storage unit 116, and ends the processing in this flowchart.

The CPU 112 receives the instruction transmitted from the CPU 132 in step S1008, and deletes all of the inspection jobs included in the job deletion list (2) from the storage unit 116.

As described above, by deleting both the associated print job and the associated inspection job in concurrence with deletion of the print job, it is possible to improve the user's convenience at the time of print job deletion.

### <Print Job Deletion Processing Flow>

In the first embodiment, the method has been described by which the user's convenience is improved at the time of print job deletion by deleting the associated inspection job in concurrence with deletion of the print job. In a third embodiment, with reference to Fig. 8, a method is described by which a user can distinguish an inspection job which has not been deleted in concurrence with deletion of a print job. The processing in steps S801 to S806 illustrated in Fig. 8 is similar to the processing described in the first embodiment, and thus descriptions thereof are omitted.

In step S807, the CPU 132 transmits, to the CPU 112, an instruction to delete all of the inspection jobs included in the job deletion list from the storage unit 116, and ends the processing in this flowchart. The CPU 112 receives the delete instruction transmitted in step S807, and deletes all of the inspection jobs included in the job deletion list from the storage unit 116. At this time, based on a result of the update of the job deletion list executed in step S806, the CPU 112 further executes the following processing on an inspection job having a difference. The CPU 112 displays the icon 510 together with the inspection job having a difference, included in the inspection job management screen 500 displayed on the UI unit 118. Alternatively, in the same way as the inspection job 509, the CPU 112 displays the inspection job in a grayed-out state. As described above, it is possible to distinguish an inspection job whose associated print job has been deleted from other inspection jobs by displaying an icon or by displaying the inspection job in a grayed-out state. The inspection job is moved to the inspection job trash box list 605 of the inspection job trash box screen 600 from the inspection job list 511. For example, a case is described where a print job deleted in step S801 has an ID 0024001, and inspection jobs having the IDs 0024001 and 0024002 are added to the job deletion list. In this case, when the inspection jobs having the IDs 0024001 and 0024002 are deleted from the job deletion list in step S806, these inspection jobs are displayed in the grayed-out state in the same way as the inspection job 509. Alternatively, in the same way as the inspection job having the ID 0024002 in Fig. 6, corresponding inspection jobs may be moved to the inspection job trash box list 605.

The processing in step S807 illustrated in Fig. 8 is similar to the processing described in the first embodiment, and thus a description thereof is omitted. As described above, the user can delete the associated inspection job in concurrence with deletion of the print job, and even in a case where the associated inspection job is not deleted, the user can recognize that the associated print job has already been deleted. In this way, it is possible to improve the user's convenience at the time of print job deletion and at the time of inspection job deletion.

The processing at the time of print job deletion according to the present embodiment is described above. The present invention is not limited to the above-described present embodiment, and any configuration is possible as long as the user can delete the inspection job associated with one print job when one print job is deleted, and also can recognize that the one print job has already been deleted even in a case where the associated inspection job is not deleted.

Further, according to the present embodiment, the user can delete the inspection job associated with one print job in concurrence with deletion of the one print job, and also can recognize that the one print job as a starting point of concurrent deletion has already been deleted even in a case where the associated inspection job is not deleted concurrently.

Herein, combining the present embodiment with the second embodiment is considered. This allows the user to delete the print job and the inspection job associated with one print job in concurrence with deletion of the one print job, and also allows the user to recognize that the one print job as a starting point of the concurrent deletion has already been deleted even in a case where the associated print job and the associated inspection job are not deleted concurrently. At this time, information about deletion of the one print job, which is regarded as a starting point of the concurrent deletion, is displayed in a similar manner to that used for the inspection job management screen 500. In other words, on the print job management screen 300 as well, the print job is displayed in a grayed-out state in the same way as the print job 308, or an icon 309 is displayed together with the print job, or the print job is moved to the print job trash box list 405 of the print job trash box screen 400 from the print job list 310. In this way, it is possible to allow the user to recognize deletion of the print job.

In the above-described three embodiments, both the print job and the inspection job associated with one print job are concurrently deleted when the one print job stored in the storage unit 136 is deleted. Further, the user can recognize that the print job as a starting point of the concurrent deletion has already been deleted even in a case where the associated print job and the associated inspection job are not deleted concurrently.

However, the processing is not limited to the case where the print job is deleted. For example, a case is cited where the user selects an inspection job from the inspection job list 511 of the inspection job management screen 500 displayed on the UI unit 118 and deletes the inspection job from the storage unit 116 by pressing the button 504. In this case, the CPU 132 searches through the storage units 116 and 136 for the first four digits of the ID of the deleted inspection job by the processing similar to the processing in steps S1001 and S1002, and adds the associated print job and the associated inspection job to the job deletion list. In this way, both the print job and the inspection job associated with the deleted inspection job may concurrently be deleted by the processing similar to the processing in step S1008.

Further, the job deletion list update screens illustrated in Figs. 9A to 9C and Figs. 11A to 11C may each be displayed on the UI unit 118 instead of the UI unit 138. Further, even in a case where the print job and the inspection job associated with the deleted inspection job are not deleted concurrently, the following method may be employed in order to allow the user to easily recognize that the inspection job that is a starting point of deletion has already been deleted. One method is to display, on the print job management screen 300 and the inspection job management screen 500, the print job and the inspection job in the grayed-out state in the same way as the print job 308 and the inspection job 509, or the icons 309 and 510 together with the print job and the inspection job, respectively. Alternatively, the print job may be moved to the print job trash box list 405 of the print job trash box screen 400 from the print job list 310, and the inspection job may be moved to the inspection job trash box list 605 of the inspection job trash box screen 600 from the inspection job list 511.

Further, in the above-described three embodiments, the print job is stored in the storage unit 136, and the inspection job is stored in the storage unit 116. However, the present invention is not limited thereto. For example, the print job may be stored in the storage unit 126 of the client PC 120 or the storage unit 203 of the image forming apparatus 100. The inspection job may be stored in the storage unit 203 of the image forming apparatus 100. In such cases, the print job management screen 300 and the print job trash box screen 400 may be displayed on the UI unit 128 of the client PC 120 or the UI unit 230 of the image forming apparatus 100. Further, the inspection job management screen 500 and the inspection job trash box screen 600 may be displayed on the UI unit 230 of the image forming apparatus 100.

As described above, it is possible to delete the print job or the inspection job associated with one print job or one inspection job in concurrence with deletion of the one print job or the one inspection job. Further, even in a case where the user does not delete the print job or the inspection job associated with one print job or one inspection job, the user can recognize that the one print job or the one inspection job has already been deleted. In this way, it is possible to improve the user's convenience at the time of print job deletion and at the time of inspection job deletion.

Further, for example, in a case where an inspection system has a function of deleting an inspection job determined as satisfying a predetermined condition from a storage unit, the user has to disable the function if there is an inspection job which should not be deleted even though the inspection job satisfies the predetermined condition. Then, in a case where the inspection job is to be deleted in a state where the function is disabled, the user has to search for a deletion-target inspection job and an associated print job and an inspection job from a job list and delete these jobs from the job list. With the above-described configuration according to the present embodiment, the user's convenience can be improved even in the above-described circumstances.

Although various examples and embodiments according to the present invention have been described above, the spirit and the scope of the present invention are not limited to specific descriptions in the present specification.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

According to the present invention, when one print job or one inspection job is deleted, a print job or an inspection job associated with the one print job or the one inspection job is concurrently deleted. Therefore, the user does not have to search for the job associated with the deleted job, and thus the user's convenience at the time of job deletion is improved.

While the present invention has been described with reference to embodiments, it is to be understood that the invention is not limited to the disclosed embodiments but is defined by the scope of the following claims.

## Claims

1. An inspection system that includes an inspection apparatus (110), wherein the inspection apparatus is communicably connected to an image forming apparatus (100) including image forming means (101) for forming an image on a recording sheet based on a print job received from an information processing apparatus (120, 130), wherein the inspection apparatus (110) is configured to execute an inspection on the image based on an inspection job, the inspection system comprising:
a controller (112) configured to determine that a delete instruction is received to delete a first print job from storage means (116, 136),
**characterized in that** the controller is further configured to:
determine a job ID of the first print job and search for associated inspection jobs and print jobs, wherein the job IDs are character strings and a part of the character string is the same for associated jobs, and
based on the delete instruction being received for the first print job, execute control to delete one or a plurality of inspection jobs associated with the first print job from the storage means (116, 136) and to delete one or a plurality of print jobs associated with the first print job from the storage means (116, 136).

2. The inspection system according to claim 1, wherein the storage means includes first storage means (136) for storing print jobs and second storage means (116) for storing inspection jobs.

3. The inspection system according to claim 2, further comprising assigning means for assigning print job IDs to print jobs when the print jobs are created,
wherein, when a registration print job for registering a reference image is created, the first storage means (136) stores the registration print job in association with an assigned print job ID, and the second storage means (116) stores an inspection job for executing an inspection on the image by using the reference image created by the registration print job, with an inspection job ID associated with the print job ID assigned to the registration print job.

4. The inspection system according to claim 2 or 3, wherein, in a case where a second inspection job for executing a new inspection is created based on a first inspection job, the second storage means (116) stores the second inspection job in association with a job ID assigned to the first inspection job.

5. The inspection system according to any one of the preceding claims, further comprising a display controller configured to display a screen on display means,
wherein the display controller displays a screen for receiving a delete instruction for one or a plurality of inspection jobs and/or print jobs associated with the first print job stored in the storage means, and
wherein, in a case where the delete instruction is received for the one or the plurality of associated jobs via the screen, the controller executes control to delete a job for which the delete instruction is received from the storage means.

6. The inspection system according to claim 5, wherein a job for which the delete instruction is not received among the one or the plurality of jobs is not deleted from the storage means.

7. The inspection system according to any one of the preceding claims, further comprising display means for displaying a screen,
wherein the delete instruction for the first print job is received by selecting from a job list including the first print job displayed on the display means.

8. The inspection system according to claim 7, wherein, in the job list, a job whose associated job has been deleted is displayed to be distinguishable from other jobs.

9. An inspection system that includes an inspection apparatus (110), wherein the inspection apparatus is communicably connected to an image forming apparatus (100) having image forming means (101) for forming an image on a recording sheet based on a print job received from an information processing apparatus (120, 130), wherein the inspection apparatus (110) is configured to execute an inspection on the image based on an inspection job, the inspection system comprising:
a controller (112) configured to determine that a delete instruction is received to delete a first inspection job from a storage means,
**characterized in that** the controller is further configured to:
determine a job ID of the first inspection job and search for associated inspection jobs and print jobs, wherein the job IDs are character strings and a part of the character string is the same for associated jobs, and
based on the delete instruction being received for the first inspection job, execute control to delete one or a plurality of print jobs associated with the first inspection job from the storage means (116, 136) and to delete one or a plurality of inspection jobs associated with the first inspection job from the storage means (116, 136).

10. The inspection system according to claim 9, further comprising assigning means for assigning print job IDs to print jobs when the print jobs are created,
wherein the storage means includes first storage means (136) for storing print jobs and a second storage means (116) for storing inspection jobs, and
wherein, when a registration print job for registering a reference image is created, the first storage means (136) stores the registration print job in association with an assigned print job ID, and the second storage means stores an inspection job for executing an inspection on the image by using the reference image created by the registration print job, with an inspection job ID associated with the print job ID assigned to the registration print job for registering the reference image.

11. The inspection system according to claim 10, wherein, in a case where a second print job for newly executing printing is created based on a first print job, the first storage means (136) stores the second print job in association with a job ID assigned to the first print job.

12. A method of controlling an inspection system for inspecting an image formed on a recording sheet by an image forming means based on a print job, wherein the inspection on the image is executed based on an inspection job, the method comprising:
determining that a delete instruction is received to delete a first print job from a storage means (116, 136),
determining a job ID of the first print job and searching for associated inspection jobs and print jobs, wherein the job IDs are character strings and a part of the character string is the same for associated jobs, and
based on the delete instruction being received for the first print job, executing control to delete one or a plurality of inspection jobs associated with the first print job from the storage means (116, 136) and to delete one or a plurality of print jobs associated with the first print job from the storage means (116, 136).

13. A computer program comprising instructions to cause a computer to perform the method of claim 12.

14. A method of controlling an inspection system for inspecting an image formed on a recording sheet by an image forming means based on a print job, wherein the inspection on the image is executed based on an inspection job, the method comprising:
determining that a delete instruction is received to delete a first inspection job from a storage means (116, 136),
determining a job ID of the first inspection job and searching for associated inspection jobs and print jobs, wherein the job IDs are character strings and a part of the character string is the same for associated jobs, and
based on the delete instruction being received for the first inspection job, executing control to delete one or a plurality of inspection jobs with the first print job from the storage means (116, 136) and to delete one or a plurality of inspection jobs associated with the first inspection job from the storage means (116, 136).

15. A computer program comprising instructions to cause a computer to perform the method of claim 14.

## Patentansprüche

1. Inspektionssystem, das eine Inspektionsvorrichtung (110) beinhaltet, wobei die Inspektionsvorrichtung kommunikativ mit einer Bilderzeugungsvorrichtung (100) verbunden ist, die eine Bilderzeugungseinrichtung (101) zum Erzeugen eines Bilds auf einem Aufzeichnungsbogen basierend auf einem von einer Informationsverarbeitungsvorrichtung (120, 130) empfangenen Druckauftrag beinhaltet, wobei die Inspektionsvorrichtung (110) konfiguriert ist, basierend auf einem Inspektionsauftrag eine Inspektion an dem Bild auszuführen, wobei das Inspektionssystem umfasst:
eine Steuerung (112), die konfiguriert ist, zu bestimmen, dass eine Löschanweisung zum Löschen eines ersten Druckauftrags aus einer Speichereinrichtung (116, 136) empfangen wird,
**dadurch gekennzeichnet, dass** die Steuerung ferner konfiguriert ist:
eine Auftrags-ID des ersten Druckauftrags zu bestimmen und nach assoziierten Inspektionsaufträgen und Druckaufträgen zu suchen, wobei die Auftrags-IDs Zeichenketten sind und ein Teil der Zeichenkette für assoziierte Aufträge derselbe ist, und
basierend auf Empfangen der Löschanweisung für den ersten Druckauftrag eine Steuerung auszuführen, um einen oder mehrere mit dem ersten Druckauftrag assoziierte Inspektionsaufträge aus der Speichereinrichtung (116, 136) zu löschen und einen oder mehrere mit dem ersten Druckauftrag assoziierte Druckaufträge aus der Speichereinrichtung (116, 136) zu löschen.

2. Inspektionssystem nach Anspruch 1, wobei die Speichereinrichtung eine erste Speichereinrichtung (136) zum Speichern von Druckaufträgen und eine zweite Speichereinrichtung (116) zum Speichern von Inspektionsaufträgen beinhaltet.

3. Inspektionssystem nach Anspruch 2, ferner umfassend eine Zuweisungseinrichtung zum Zuweisen von Druckauftrags-IDs zu Druckaufträgen, wenn die Druckaufträge erstellt werden,
wobei, wenn ein Registrierungsdruckauftrag zum Registrieren eines Referenzbilds erstellt wird, die erste Speichereinrichtung (136) den Registrierungsdruckauftrag in Assoziation mit einer zugewiesenen Druckauftrags-ID speichert und die zweite Speichereinrichtung (116) einen Inspektionsauftrag zum Ausführen einer Inspektion an dem Bild unter Verwendung des durch den Registrierungsdruckauftrag erstellten Referenzbilds speichert, und zwar mit einer Inspektionsauftrags-ID, die mit der dem Registrierungsdruckauftrag zugewiesenen Druckauftrags-ID assoziiert ist.

4. Inspektionssystem nach Anspruch 2 oder 3, wobei, falls ein zweiter Inspektionsauftrag zum Ausführen einer neuen Inspektion basierend auf einem ersten Inspektionsauftrag erstellt wird, die zweite Speichereinrichtung (116) den zweiten Inspektionsauftrag in Assoziation mit einer dem ersten Inspektionsauftrag zugewiesenen Auftrags-ID speichert.

5. Inspektionssystem nach einem der vorhergehenden Ansprüche, ferner umfassend eine Anzeigesteuerung, die konfiguriert ist, einen Bildschirm auf einer Anzeigeeinrichtung anzuzeigen,
wobei die Anzeigesteuerung einen Bildschirm zum Empfangen einer Löschanweisung für einen oder mehrere mit dem in der Speichereinrichtung gespeicherten ersten Druckauftrag assoziierte Inspektionsaufträge und/oder Druckaufträge anzeigt, und
wobei, falls die Löschanweisung für den einen oder die mehreren assoziierten Aufträge über den Bildschirm empfangen wird, die Steuerung eine Steuerung ausführt, um einen Auftrag, für den die Löschanweisung empfangen wird, aus der Speichereinrichtung zu löschen.

6. Inspektionssystem nach Anspruch 5, wobei ein Auftrag von dem einen oder den mehreren Aufträgen, für den die Löschanweisung nicht empfangen wird, nicht aus der Speichereinrichtung gelöscht wird.

7. Inspektionssystem nach einem der vorhergehenden Ansprüche, ferner umfassend eine Anzeigeeinrichtung zum Anzeigen eines Bildschirms,
wobei die Löschanweisung für den ersten Druckauftrag durch Auswählen aus einer auf der Anzeigeeinrichtung angezeigten Auftragsliste, die den ersten Druckauftrag beinhaltet, empfangen wird.

8. Inspektionssystem nach Anspruch 7, wobei in der Auftragsliste ein Auftrag, dessen assoziierter Auftrag gelöscht wurde, so angezeigt wird, dass er von anderen Aufträgen unterscheidbar ist.

9. Inspektionssystem, das eine Inspektionsvorrichtung (110) beinhaltet, wobei die Inspektionsvorrichtung kommunikativ mit einer Bilderzeugungsvorrichtung (100) verbunden ist, die eine Bilderzeugungseinrichtung (101) zum Erzeugen eines Bilds auf einem Aufzeichnungsbogen basierend auf einem von einer Informationsverarbeitungsvorrichtung (120, 130) empfangenen Druckauftrag aufweist, wobei die Inspektionsvorrichtung (110) konfiguriert ist, basierend auf einem Inspektionsauftrag eine Inspektion an dem Bild auszuführen, wobei das Inspektionssystem umfasst:
eine Steuerung (112), die konfiguriert ist, zu bestimmen, dass eine Löschanweisung zum Löschen eines ersten Inspektionsauftrag aus einer Speichereinrichtung empfangen wird,
**dadurch gekennzeichnet, dass** die Steuerung ferner konfiguriert ist:
eine Auftrags-ID des ersten Inspektionsauftrags zu bestimmen und nach assoziierten Inspektionsaufträgen und Druckaufträgen zu suchen, wobei die Auftrags-IDs Zeichenketten sind und ein Teil der Zeichenkette für assoziierte Aufträge derselbe ist, und
basierend auf Empfangen der Löschanweisung für den ersten Inspektionsauftrag eine Steuerung auszuführen, um einen oder mehrere mit dem ersten Inspektionsauftrag assoziierte Druckaufträge aus der Speichereinrichtung (116, 136) zu löschen und einen oder mehrere mit dem ersten Inspektionsauftrag assoziierte Inspektionsaufträge aus der Speichereinrichtung (116, 136) zu löschen.

10. Inspektionssystem nach Anspruch 9, ferner umfassend eine Zuweisungseinrichtung zum Zuweisen von Druckauftrags-IDs zu Druckaufträgen, wenn die Druckaufträge erstellt werden,
wobei die Speichereinrichtung eine erste Speichereinrichtung (136) zum Speichern von Druckaufträgen und eine zweite Speichereinrichtung (116) zum Speichern von Inspektionsaufträgen beinhaltet, und
wobei, wenn ein Registrierungsdruckauftrag zum Registrieren eines Referenzbilds erstellt wird, die erste Speichereinrichtung (136) den Registrierungsdruckauftrag in Assoziation mit einer zugewiesenen Druckauftrags-ID speichert und die zweite Speichereinrichtung einen Inspektionsauftrag zum Ausführen einer Inspektion an dem Bild unter Verwendung des durch den Registrierungsdruckauftrag erstellten Referenzbilds speichert, und zwar mit einer Inspektionsauftrags-ID, die mit der dem Registrierungsdruckauftrag zum Registrieren des Referenzbilds zugewiesenen Druckauftrags-ID assoziiert ist.

11. Inspektionssystem nach Anspruch 10, wobei, falls ein zweiter Druckauftrag zum erneuten Ausführen von Drucken basierend auf einem ersten Druckauftrag erstellt wird, die erste Speichereinrichtung (136) den zweiten Druckauftrag in Assoziation mit einer dem ersten Druckauftrag zugewiesenen Auftrags-ID speichert.

12. Verfahren zum Steuern eines Inspektionssystems zum Inspizieren eines durch eine Bilderzeugungseinrichtung basierend auf einem Druckauftrag auf einem Aufzeichnungsbogen erzeugten Bilds, wobei die Inspektion an dem Bild basierend auf einem Inspektionsauftrag ausgeführt wird, wobei das Verfahren umfasst:
Bestimmen, dass eine Löschanweisung zum Löschen eines ersten Druckauftrags aus einer Speichereinrichtung (116, 136) empfangen wird,
Bestimmen einer Auftrags-ID des ersten Druckauftrags und Suchen nach assoziierten Inspektionsaufträgen und Druckaufträgen, wobei die Auftrags-IDs Zeichenketten sind und ein Teil der Zeichenkette für assoziierte Aufträge derselbe ist, und
basierend auf Empfangen der Löschanweisung für den ersten Druckauftrag, Ausführen einer Steuerung, um einen oder mehrere mit dem ersten Druckauftrag assoziierte Inspektionsaufträge aus der Speichereinrichtung (116, 136) zu löschen und einen oder mehrere mit dem ersten Druckauftrag assoziierte Druckaufträge aus der Speichereinrichtung (116, 136) zu löschen.

13. Computerprogramm, umfassend Anweisungen zum Veranlassen eines Computers, das Verfahren nach Anspruch 12 durchzuführen.

14. Verfahren zum Steuern eines Inspektionssystems zum Inspizieren eines durch eine Bilderzeugungseinrichtung basierend auf einem Druckauftrag auf einem Aufzeichnungsbogen erzeugten Bilds, wobei die Inspektion an dem Bild basierend auf einem Inspektionsauftrag ausgeführt wird, wobei das Verfahren umfasst:
Bestimmen, dass eine Löschanweisung zum Löschen eines ersten Inspektionsauftrags aus einer Speichereinrichtung (116, 136) empfangen wird,
Bestimmen einer Auftrags-ID des ersten Inspektionsauftrags und Suchen nach assoziierten Inspektionsaufträgen und Druckaufträgen, wobei die Auftrags-IDs Zeichenketten sind und ein Teil der Zeichenkette für assoziierte Aufträge derselbe ist, und
Ausführen einer Steuerung basierend auf Empfangen der Löschanweisung für den ersten Inspektionsauftrag, um einen oder mehrere Inspektionsaufträge mit dem ersten Druckauftrag aus der Speichereinrichtung (116, 136) zu löschen und einen oder mehrere mit dem ersten Inspektionsauftrag assoziierte Inspektionsaufträge aus der Speichereinrichtung (116, 136) zu löschen.

15. Computerprogramm, umfassend Anweisungen zum Veranlassen eines Computers, das Verfahren nach Anspruch 14 durchzuführen.

## Revendications

1. Système d'inspection qui comporte un appareil d'inspection (110), dans lequel l'appareil d'inspection est connecté en communication à un appareil de formation d'image (100) comportant des moyens de formation d'image (101) pour former une image sur une feuille d'enregistrement sur la base d'une tâche d'impression reçue d'un appareil de traitement d'informations (120, 130), dans lequel l'appareil d'inspection (110) est configuré pour exécuter une inspection sur l'image sur la base d'une tâche d'inspection, le système d'inspection comprenant :
un dispositif de commande (112) configuré pour déterminer qu'une instruction de suppression est reçue pour supprimer une première tâche d'impression des moyens de stockage (116, 136),
**caractérisé en ce que** le dispositif de commande est en outre configuré pour :
déterminer un ID de tâche de la première tâche d'impression et rechercher des tâches d'inspection et des tâches d'impression associées, dans lequel les ID de tâche sont des chaînes de caractères et une partie de la chaîne de caractères est la même pour des tâches associées, et
sur la base de l'instruction de suppression qui est reçue pour la première tâche d'impression, exécuter une commande pour supprimer une ou une pluralité de tâches d'inspection associées à la première tâche d'impression des moyens de stockage (116, 136) et pour supprimer une ou une pluralité de tâches d'impression associées à la première tâche d'impression des moyens de stockage (116, 136).

2. Système d'inspection selon la revendication 1, dans lequel les moyens de stockage comportent des premiers moyens de stockage (136) pour stocker des tâches d'impression et des seconds moyens de stockage (116) pour stocker des tâches d'inspection.

3. Système d'inspection selon la revendication 2, comprenant en outre des moyens d'attribution pour attribuer des ID de tâche d'impression à des tâches d'impression lorsque les tâches d'impression sont créées, dans lequel, lorsqu'une tâche d'impression d'enregistrement pour enregistrer une image de référence est créée, les premiers moyens de stockage (136) stockent la tâche d'impression d'enregistrement en association avec un ID de tâche d'impression attribué, et les seconds moyens de stockage (116) stockent une tâche d'inspection pour exécuter une inspection sur l'image en utilisant l'image de référence créée par la tâche d'impression d'enregistrement, avec un ID de tâche d'inspection associé à l'ID de tâche d'impression attribué à la tâche d'impression d'enregistrement.

4. Système d'inspection selon la revendication 2 ou 3, dans lequel, dans un cas où une seconde tâche d'inspection pour exécuter une nouvelle d'inspection est créée sur la base d'une première tâche d'inspection, les seconds moyens de stockage (116) stockent la seconde tâche d'inspection en association avec un ID de tâche attribué à la première tâche d'inspection.

5. Système d'inspection selon l'une quelconque des revendications précédentes, comprenant en outre un dispositif de commande d'affichage configuré pour afficher un écran sur des moyens d'affichage,
dans lequel le dispositif de commande d'affichage affiche un écran pour recevoir une instruction de suppression pour une ou une pluralité de tâches d'inspection et/ou tâches d'impression associées à la première tâche d'impression stockée dans les moyens de stockage, et
dans lequel, dans un cas où l'instruction de suppression est reçue pour ladite une tâche ou ladite pluralité de tâches associées via l'écran, le dispositif de commande exécute une commande pour supprimer une tâche pour laquelle est reçue l'instruction de suppression des moyens de stockage.

6. Système d'inspection selon la revendication 5, dans lequel une tâche pour laquelle l'instruction de suppression n'est pas reçue parmi ladite une tâche ou ladite pluralité de tâches n'est pas supprimée des moyens de stockage.

7. Système d'inspection selon l'une quelconque des revendications précédentes, comprenant en outre des moyens d'affichage pour afficher un écran,
dans lequel l'instruction de suppression pour la première tâche d'impression est reçue par sélection parmi une liste de tâches comportant la première tâche d'impression affichée sur les moyens d'affichage.

8. Système d'inspection selon la revendication 7, dans lequel, dans la liste de tâches, une tâche dont une tâche associée a été supprimée est affichée pour pouvoir être distinguée d'autres tâches.

9. Système d'inspection qui comporte un appareil d'inspection (110), dans lequel l'appareil d'inspection est connecté en communication à un appareil de formation d'image (100) ayant des moyens de formation d'image (101) pour former une image sur une feuille d'enregistrement sur la base d'une tâche d'impression reçue d'un appareil de traitement d'informations (120, 130), dans lequel l'appareil d'inspection (110) est configuré pour exécuter une inspection sur l'image sur la base d'une tâche d'inspection, le système d'inspection comprenant :
un dispositif de commande (112) configuré pour déterminer qu'une instruction de suppression est reçue pour supprimer une première tâche d'inspection des moyens de stockage,
**caractérisé en ce que** le dispositif de commande est en outre configuré pour :
déterminer un ID de tâche de la première tâche d'inspection et rechercher des tâches d'inspection et des tâches d'impression associées, dans lequel les ID de tâche sont des chaînes de caractères et une partie de la chaîne de caractères est la même pour des tâches associées, et
sur la base de l'instruction de suppression qui est reçue pour la première tâche d'inspection, exécuter une commande pour supprimer une ou une pluralité de tâches d'impression associées à la première tâche d'inspection des moyens de stockage (116, 136) et pour supprimer une ou une pluralité de tâches d'inspection associées à la première tâche d'inspection des moyens de stockage (116, 136).

10. Système d'inspection selon la revendication 9, comprenant en outre des moyens d'attribution pour attribuer des ID de tâche d'impression à des tâches d'impression lorsque les tâches d'impression sont créées, dans lequel les moyens de stockage comportent des premiers moyens de stockage (136) pour stocker des tâches d'impression et des seconds moyens de stockage (116) pour stocker des tâches d'inspection, et
dans lequel, lorsqu'une tâche d'impression d'enregistrement pour enregistrer une image de référence est créée, les premiers moyens de stockage (136) stockent la tâche d'impression d'enregistrement en association avec un ID de tâche d'impression attribué, et les seconds moyens de stockage stockent une tâche d'inspection pour exécuter une inspection sur l'image en utilisant l'image de référence créée par la tâche d'impression d'enregistrement, avec un ID de tâche d'inspection associé à l'ID de tâche d'impression attribué à la tâche d'impression d'enregistrement pour enregistrer l'image de référence.

11. Système d'inspection selon la revendication 10, dans lequel, dans un cas où une seconde tâche d'impression pour exécuter nouvellement une impression est créée sur la base d'une première tâche d'impression, les premiers moyens de stockage (136) stockent la seconde tâche d'impression en association avec un ID de tâche attribué à la première tâche d'impression.

12. Procédé de commande d'un système d'inspection pour inspecter une image formée sur une feuille d'enregistrement par des moyens de formation d'image sur la base d'une tâche d'impression, dans lequel l'inspection sur l'image est exécutée sur la base d'une tâche d'inspection, le procédé comprenant :
la détermination qu'une instruction de suppression est reçue pour supprimer une première tâche d'impression de moyens de stockage (116, 136),
la détermination d'un ID de tâche de la première tâche d'impression et la recherche de tâches d'inspection et de tâches d'impression associées, dans lequel les ID de tâche sont des chaînes de caractères et une partie de la chaîne de caractères est la même pour des tâches associées, et
sur la base de l'instruction de suppression qui est reçue pour la première tâche d'impression, l'exécution d'une commande pour supprimer une ou une pluralité de tâches d'inspection associées à la première tâche d'impression des moyens de stockage (116, 136) et pour supprimer une ou une pluralité de tâches d'impression associées à la première tâche d'impression des moyens de stockage (116, 136).

13. Programme informatique comprenant des instructions pour amener un ordinateur à mettre en œuvre le procédé selon la revendication 12.

14. Procédé de commande d'un système d'inspection pour inspecter une image formée sur une feuille d'enregistrement par des moyens de formation d'image sur la base d'une tâche d'impression, dans lequel l'inspection sur l'image est exécutée sur la base d'une tâche d'inspection, le procédé comprenant :
la détermination qu'une instruction de suppression est reçue pour supprimer une première tâche d'inspection de moyens de stockage (116, 136),
la détermination d'un ID de tâche de la première tâche d'inspection et la recherche de tâches d'inspection et de tâches d'impression associées, dans lequel les ID de tâche sont des chaînes de caractères et une partie de la chaîne de caractères est la même pour des tâches associées, et
sur la base de l'instruction de suppression qui est reçue pour la première tâche d'inspection, l'exécution d'une commande pour supprimer une ou une pluralité de tâches d'inspection avec la première tâche d'impression des moyens de stockage (116, 136) et pour supprimer une ou une pluralité de tâches d'inspection associées à la première tâche d'inspection des moyens de stockage (116, 136).

15. Programme informatique comprenant des instructions pour amener un ordinateur à mettre en œuvre le procédé selon la revendication 14.
